# EUROPEAN PATENT SPECIFICATION

(11) **EP 3 842 230 B1**
(45) Date of publication and mention of the grant of the patent: **06.03.2024**
(21) Application number: 19306763.4
(22) Date of filing: 23.12.2019
(51) Int. Cl.: B33Y 80/00, B29C 64/00, B60T 17/04

(54) **PNEUMATIC BRAKING CONTROL SYSTEM COMPRISING A UNITARY COMPONENT, AND RAILROAD VEHICLE USING THE SAME**
PNEUMATISCHES BREMSSTEUERUNGSSYSTEM MIT EINER EINHEITLICHEN KOMPONENTE UND SCHIENENFAHRZEUG DAMIT
SYSTÈME DE COMMANDE DE FREINAGE PNEUMATIQUE COMPRENANT UN COMPOSANT UNITAIRE ET VÉHICULE FERROVIAIRE L'UTILISANT

(43) Date of publication of application: 30.06.2021
(73) Proprietor: ALSTOM Holdings, 93400 Saint-Ouen-sur-Seine (FR)
(72) Inventor: STECHERT, Carsten, 38102 Braunschweig (DE); GRUNERT, Andreas, 38268 Lengede (DE)
(74) Representative: Lavoix

(56) References cited:
- DE-A1- 19 715 528
- US-A1- 2016 280 197
- US-A1- 2019 381 983

## Description

### TECHNICAL FIELD OF THE INVENTION

This invention relates to a pneumatic braking control system, onboard a vehicle, the pneumatic braking control system comprising a pneumatic module provided with several fluid connectors and a plurality of pipes, a first extremity of each pipe being fitted to respectively one fluid connector of the pneumatic module.

### BACKGROUND OF THE INVENTION

In the field of onboard braking systems, it is known to have a braking control system fitted onto a vehicle, the braking control system carrying various tasks such as but not limited to regulating the braking during normal operations, releasing the braking, activating the safety braking in case of emergency, either automatically or under the action of an operator. To carry all these actions, the braking control system comprises several components such as controllers, valves, this list being not limitative. These various components are usually integrated into a module, and connected through a plurality of pipes to each other and to the actual braking units or to an air supply. This plurality of pipes, also called piping system, must be fitted individually to each component, ensuring tightness, durability, for the service life of the vehicle. The braking control system is usually mounted in a cluttered space, such as within an equipment bay or under the car body of a vehicle. The plurality of pipes is installed in a tight space, and there is a need to improve the efficiency and reliability of such piping system. Furthermore, the implementation of the braking control system might differ according to the type of vehicle it is installed on. As a result, the piping system cannot be standardized, and the fitting operation of such piping system is a very tedious task, with many couplings, specific shapes and geometries resulting from cluttering constraints rather than solely fluid transfer constraints, among others.

US-B-6932437 presents a pneumatic braking control system onboard a railroad vehicle, this pneumatic braking control system being integrated with an electronic brake control. The structure of the piping system of the pneumatic braking control system is not disclosed.

On the other hand, US-A-2016/0280197 discloses a hydraulic block produced by additive manufacturing for a hydraulic unit of a brake controller of a hydraulic vehicle brake system. The structure and the piping layout of the hydraulic block remain similar to the original hydraulic block. Therefore the interfaces with the other components of the vehicle, such as a hydraulic fluid supply, a braking unit, etc., remain unchanged and the hydraulic block still takes as much space as the original hydraulic block.

US-2019 381983-A1 discloses a pneumatic block that can be produced by additive manufacturing for a pneumatic vehicle brake system. However, US-2019 381983-A1 remains silent regarding the connections of such pneumatic block with the other components of the vehicle, such as a pneumatic fluid supply, etc.

DE-197 15 528-A1 describes a pneumatic bus, which is produced by extrusion and comprises several parallel tubes.

The invention aims at solving these problems with a new pneumatic braking control system, such a braking control system offering a more compact structure, easier fitting in a tight space, reduced risk of leakage and better reliability.

To this end, the invention concerns a pneumatic braking control system onboard a railroad vehicle, of the type mentioned here-above. According to the invention, the unitary component defines a single inner volume, the single inner volume including the internal volume of each pipe, whereas the plurality of pipes belongs to a unitary component producible by additive manufacturing.

Thanks to the invention, the pneumatic braking control system can be easily fitted in a tight space onboard a railroad vehicle, with a reduced number of fittings and small pieces, therefore reducing assembly times and minimizing the risk of faulty connection.

According to further aspects of the invention, which are advantageous but not compulsory, the pneumatic braking control system might incorporate one or several of the following features:
- the unitary component is connected to at least one outlet;
- the unitary component comprises a main duct and the plurality of pipes branching out of the main duct;
- the single inner volume of the unitary component is formed of an inner volume of the main duct and of the inner volumes of the pipes;
- the unitary component includes a central portion and the plurality of pipes branching out of the central portion;
- the single inner volume of the unitary component is formed of an inner volume of the central portion and of the inner volumes of the pipes;
- the unitary component material is made of synthetic material, and
- the unitary component material is made of metallic material.

The invention also concerns a railroad vehicle, including at least one pneumatic braking control system, the pneumatic braking control system being of the type mentioned here-above.

### BRIEF DESCRIPTION OF THE DRAWINGS

The invention will be better understood on the basis of the following description, which is given in correspondence with the attached figures and as an illustrative example without restricting the object of the invention. In the annexed figures:
Figure 1 is a schematic perspective view of a pneumatic braking control system according to a first embodiment of the invention;
Figure 2 is a local cross-section of the pneumatic braking control system, along line II-II on figure 1;
Figure 3 is a schematic perspective view similar to figure 1 of a pneumatic braking control system according to a second embodiment of the invention.

### DETAILED DESCRIPTION OF SOME EMBODIMENTS

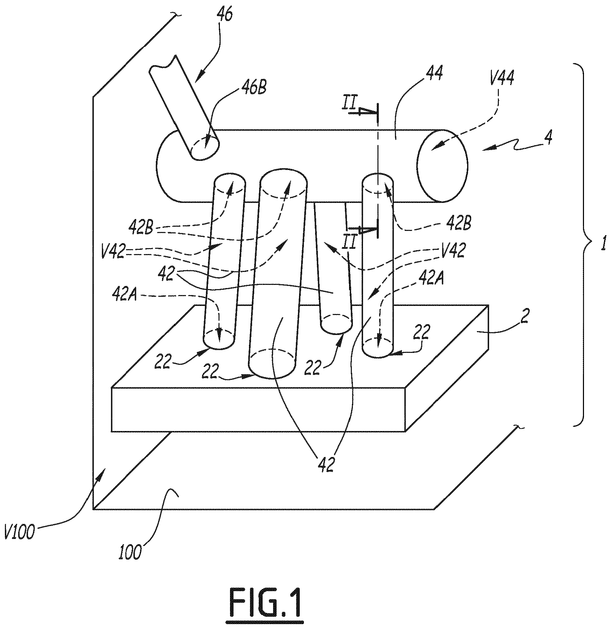

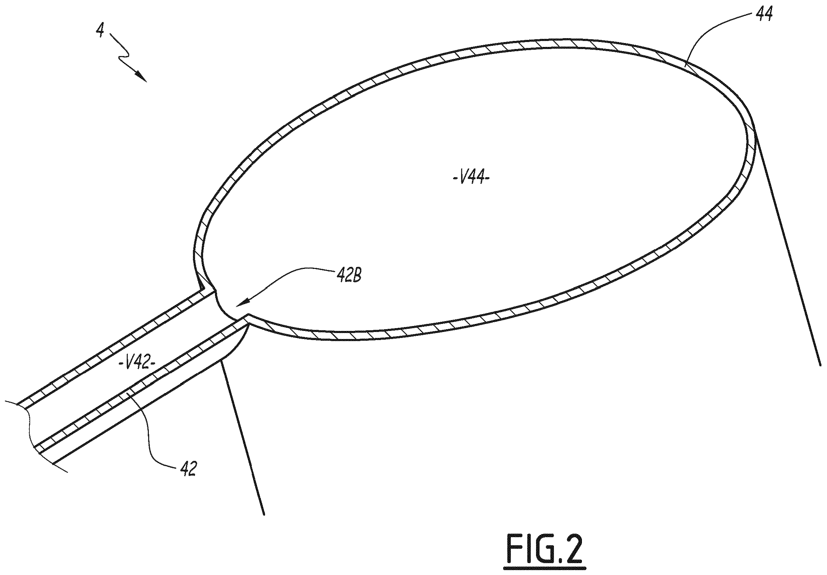

The pneumatic braking control system 1 represented of figures 1 and 2 comprises a pneumatic module 2 and is designed to be mounted in an interior volume V100 of a railroad vehicle 100. The pneumatic module 2 is provided with several fluid connectors 22. The number, size and spatial disposition of the fluid connectors 22 is represented on figure 1 in a schematic way. The actual implementation of the fluid connectors 22 depends on the intended use and features of the pneumatic braking control system 1. It is known per se in its specific technical field.

The pneumatic braking control system 1 also comprises a unitary component 4. The unitary component 4 comprises a plurality of pipes 42. Each pipe 42 has an internal volume V42, a first extremity 42A, and a second extremity 42B, the first extremity 42A being different from the second extremity 42B. The first extremity 42A is connected to a fluid connector 22.

The unitary component 4 also comprises a main duct 44. The main duct 44 has an elongated shape and an inner duct volume V44. Each pipe 42 is connected to the main duct 44 through its second extremity 42B.

As shown on figure 2, the pipe 42 is connected to the main duct 44, and the internal volume V42 is connected to the duct volume V44.

The unitary component 4 is hollow and defines a single inner volume V4. The single inner volume V4 is the sum of the internal volume V42 of all pipes 42 with the duct volume V44.

As shown on figure 1, each fluid connector 22 of the pneumatic module 2 is fitted to a first extremity 42A of a pipe 42. "Fitted" means here that a fluid connection, between the first extremity 42A of a pipe 42 and the associated fluid connector 22, has no fluid leakage, can ensure a proper tightness and does not unfasten under normal operation, because of vibrations for example. Such a fitted connection can be achieved with the help of various components such as couplings and/or seals, these examples being not limitative. A fluid connector 22 can have various sizes and diameters, in which case the first extremity 42A has a suitable size and geometry to ensure a proper fitting with the coupling elements, these coupling elements being not shown on the figures. In particular, the first extremity 42A of a pipe 42 can have a profile according to ISO fluid connector profiles, preferably ending with a 24° cone.

The pipes 42 shown on figure 1 are schematically represented by straight cylinders of constant circular sections, however this representation is not limitative, and the pipes 42 can be built with different shapes, sizes and lengths to allow for an easier integration onboard the vehicle, while not impairing the movements of the fluid within the pipes 42.

Similarly, on figure 2 the section of the main duct 44 is not a circle. More generally, the shape of the main duct 44 can be freely designed with consideration to fluid dynamics and to the actual integration of the pneumatic braking control system 1 onboard the railroad vehicle 100.

On figure 2, the pipe 42 is roughly orthogonal to the surface of the main duct 44. However the shape and geometry of the connection between the pipe 42 and the main duct 44 can be designed differently with consideration to fluid dynamics in order to reduce the pressure drop within the unitary component 4. For example, the second extremity 42B of at least some of the pipes 42 can be flared, with no sharp angle.

The term "unitary" is used in this application to denote that the unitary component 4 is made as a single piece during manufacturing. Thus, a unitary component has a monolithic construction for the entire component, and is different from a component that has been made from a plurality of pieces that have been joined together, for example by bolting or welding, to form a single component.

In the present invention, the unitary component 4 is produced by additive manufacturing.

Additive manufacturing, also known under various names such as "additive layer manufacturing", "ALM" or "3D printing", is a process used to produce functional and complex objects, layer by layer, without molds or dies. Typically, such processes include providing material, such as metal or plastic, in the form of a powder or a wire, and, using an energy source, such as a laser beam, electron beam or an electric, or plasma welding arc, melting an amount of that material and depositing the melted material on a layer of an object to be produced.

Depending on the operating pressure of the pneumatic module or on the criticity of the braking component, the unitary component 4 can be made of metallic material, or made of synthetic material. In particular, thermoplastic materials that fulfill the standard EN45545 related to fire smoke and toxicity are suitable for the use onboard railroad vehicles and can be processed through additive manufacturing.

On figure 1, the pneumatic braking control system 1 also comprises an air supply 46. The air supply 46 leads to the duct volume V44 through an outlet 46B. The air supply 46 is fluidly connected to a specific supply component, not shown on the figure 1, such as an air compressor or an air tank used to regulate the air pressure, these examples being not limitative. These supply components can be connected to the unitary component 4 through a single air supply 46 as shown on figure 1, or in an alternative embodiment, through several air supplies 46.

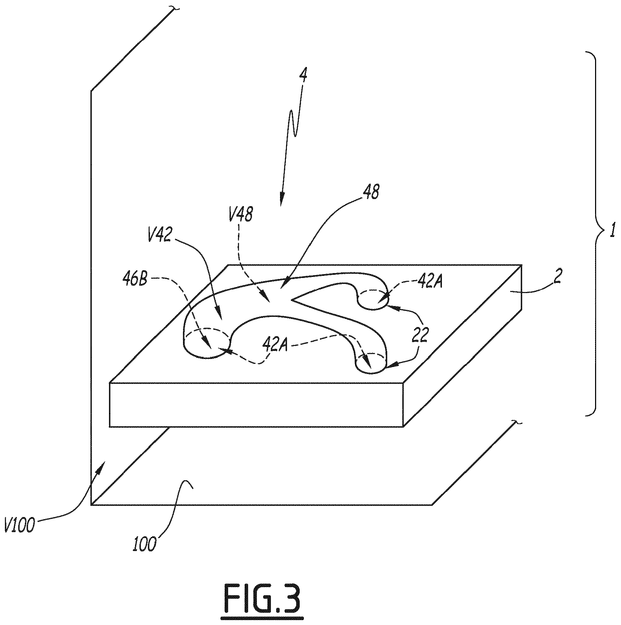

Figure 3 shows an alternative embodiment of a pneumatic braking control system 1 according to the invention. In this embodiment, the parts of pneumatic braking control system 1 identical or similar to the ones of the first embodiment have the same reference numerals. Here-after, mainly the differences between the first and second embodiments are detailed.

In this second embodiment, the pneumatic module 2 has a built-in outlet 46B on its surface, for example linked to a valve located inside the pneumatic module 2, this valve being not represented. The pneumatic module 2 has also several fluid connectors 22.

The pipes 42 of the unitary component 4 have curved and elbowed sections, and are connected through their first extremity 42A to the outlet 46B and to the fluid connectors 22.

The unitary component 4 comprises also a central portion 48, having a central volume V48. This central portion 48 is not an elongated duct but corresponds to a node of unitary component 4, where all pipes 42 converge.

The second extremity 42B of each pipe 42 branches into the central portion 48. Similarly, the internal volume V42 of each pipe 42 is connected to the central volume V48. The single inner volume V4 of the unitary component 4 is the sum of the internal volume V42 of all pipes 42 with the central volume V48.

In this second embodiment, unitary component 4 is also produced by additive manufacturing.

In all embodiments, the unitary component 4 has a single inner volume V4, that is to say that the single inner volume V4 is not split in two or more sub-volumes by any internal wall or partition.

Also, the single inner volume V4 is closed, that is to say that there is no free opening or hole between the single inner volume V4 and the interior volume V100 of the railroad vehicle 100.

In normal operation, at least one pneumatic braking control system 1 is installed onboard railroad vehicle 100, the pneumatic braking control system 1 being used to regulate and control the compressed air activating the braking units on the trucks or wheels.

"Onboard" is not limited to the interior volume V100, as schematically shown on figures 1 and 3. Alternatively, the pneumatic braking control system 1 can be installed under the carbody of a railroad vehicle 100, on top of its roof, or in any other place as required by the implementation of the pneumatic braking system in a specific railroad vehicle, as known per se in its specific technical field.

The respective features of the different embodiments and variants of the pneumatic braking control system considered in this description can be combined in accordance with the appended claims.

## Claims

1. A pneumatic braking control system (1), onboard a vehicle (100), the pneumatic braking control system comprising:
- a pneumatic module (2) provided with several fluid connectors (22),
- a plurality of pipes (42) having each an internal volume (V42), a first extremity (42A) of each pipe being fitted to respectively one fluid connector,
**characterized in that** the plurality of pipes belongs to a unitary component (4) producible by additive manufacturing and wherein the unitary component (4) defines a single inner volume (V4), the single inner volume including the internal volume (V42) of each pipe (42).

2. A pneumatic braking control system (1) according to claim 1, wherein the unitary component (4) is connected to at least one outlet (46B).

3. A pneumatic braking control system (1) according to any one of the claims 1 or 2, wherein the unitary component (4) comprises a main duct (44), the plurality of pipes (42) branching out of the main duct (44).

4. A pneumatic braking control system (1) according to claims 1 and 3, wherein the single inner volume (V4) of the unitary component (4) is formed of an inner volume (V44) of the main duct (44) and of the inner volumes (V42) of the pipes (42).

5. A pneumatic braking control system (1) according to any one of claims 1 or 2, wherein the unitary component includes a central portion (48), the plurality of pipes (42) branching out of the central portion (48).

6. A pneumatic braking control system (1) according to claims 1 and 5, wherein the single inner volume (V4) of the unitary component (4) is formed of an inner volume (V48) of the central portion (48) and of the inner volumes (V42) of the pipes (42).

7. A pneumatic braking control system (1) according to any one of claims 1 to 6, wherein the unitary component (4) material is made of synthetic material.

8. A pneumatic braking control system (1) according to any one of claims 1 to 6, wherein the unitary component (4) material is made of metallic material.

9. A railroad vehicle (100), including at least one pneumatic braking control system (1) according to any one of claims 1 to 8.

## Patentansprüche

1. Ein pneumatisches Bremssteuerungssystem (1) an Bord eines Fahrzeugs (100), wobei das pneumatische Bremssteuerungssystem umfasst:
- ein pneumatisches Modul (2), das mit mehreren Fluidanschlüssen (22) versehen ist,
- eine Vielzahl von Rohrleitungen (42), die jeweils ein Innenvolumen (V42) aufweisen, wobei ein erstes Ende (42A) jeder Rohrleitung an jeweils einen Fluidanschluss angebracht ist, **dadurch gekennzeichnet, dass** die Vielzahl von Rohrleitungen zu einem einheitlichen Bauteil (4) gehört, das durch additive Fertigung herstellbar ist, und wobei das einheitliche Bauteil (4) ein einziges Innenvolumen (V4) definiert, wobei das einzige Innenvolumen das Innenvolumen (V42) jeder Rohrleitung (42) umfasst.

2. Pneumatisches Bremssteuerungssystem (1) nach Anspruch 1, wobei das einheitliche Bauteil (4) mit mindestens einem Auslass (46B) verbunden ist.

3. Pneumatisches Bremssteuerungssystem (1) nach einem der Ansprüche 1 oder 2, wobei das einheitliche Bauteil (4) einen Hauptkanal (44) umfasst, von dem die mehreren Rohrleitungen (42) abzweigen.

4. Pneumatisches Bremssteuerungssystem (1) nach den Ansprüchen 1 und 3, wobei das einzige Innenvolumen (V4) des einheitlichen Bauteils (4) aus einem Innenvolumen (V44) des Hauptkanals (44) und aus den Innenvolumina (V42) der Rohrleitungen (42) gebildet wird.

5. Pneumatisches Bremssteuerungssystem (1) nach einem der Ansprüche 1 oder 2, wobei das einheitliche Bauteil einen zentralen Abschnitt (48) aufweist und die mehreren Rohrleitungen (42) von dem zentralen Abschnitt (48) abzweigen.

6. Pneumatisches Bremssteuerungssystem (1) nach einem der Ansprüche 1 und 5, wobei das einzige Innenvolumen (V4) des einheitlichen Bauteils (4) aus einem Innenvolumen (V48) des Mittelteils (48) und aus den Innenvolumina (V42) der Rohrleitungen (42) gebildet wird.

7. Pneumatisches Bremssteuerungssystem (1) nach einem der Ansprüche 1 bis 6, wobei das Material des einheitlichen Bauteils (4) aus Kunststoff hergestellt ist.

8. Pneumatisches Bremssteuerungssystem (1) nach einem der Ansprüche 1 bis 6, wobei das Material des einheitlichen Bauteils (4) aus einem metallischen Werkstoff besteht.

9. Eisenbahnfahrzeug (100), **dadurch gekennzeichnet, dass** es mindestens ein pneumatisches Bremssteuerungssystem (1) nach einem der Ansprüche 1 bis 8 umfasst.

## Revendications

1. Système de commande de freinage pneumatique (1), à bord d'un véhicule (100), le système de commande de freinage pneumatique comprenant :
- un module pneumatique (2) muni de plusieurs connecteurs de fluide (22),
- une pluralité de tuyaux (42) présentant chacun un volume interne (V42), une première extrémité (42A) de chaque tuyau étant fixée respectivement à un connecteur de fluide, **caractérisé en ce que** la pluralité de tuyaux appartient à un composant unitaire (4) pouvant être produit par fabrication additive et dans lequel le composant unitaire (4) définit un volume intérieur unique (V4), le volume intérieur unique incluant le volume intérieur (V42) de chaque tuyau (42).

2. Système de commande de freinage pneumatique (1) selon la revendication 1, dans lequel le composant unitaire (4) est relié à au moins une sortie (46B).

3. Système de commande de freinage pneumatique (1) selon l'une quelconque des revendications 1 ou 2, dans lequel le composant unitaire (4) comprend un conduit principal (44), la pluralité de tuyaux (42) se ramifiant à partir du conduit principal (44).

4. Système de commande de freinage pneumatique (1) selon les revendications 1 et 3, dans lequel le volume intérieur unique (V4) du composant unitaire (4) est formé d'un volume intérieur (V44) du conduit principal (44) et des volumes intérieurs (V42) des tuyaux (42).

5. Système de commande de freinage pneumatique (1) selon l'une quelconque des revendications 1 ou 2, dans lequel le composant unitaire inclut une partie centrale (48), la pluralité de tuyaux (42) se ramifiant à partir de la partie centrale (48).

6. Système de commande de freinage pneumatique (1) selon les revendications 1 et 5, dans lequel le volume intérieur unique (V4) du composant unitaire (4) est formé d'un volume intérieur (V48) de la partie centrale (48) et des volumes intérieurs (V42) des tuyaux (42).

7. Système de commande de freinage pneumatique (1) selon l'une quelconque des revendications 1 à 6, dans lequel le matériau du composant unitaire (4) est constitué de matière synthétique.

8. Système de commande de freinage pneumatique (1) selon l'une quelconque des revendications 1 à 6, dans lequel le matériau du composant unitaire (4) est constitué de matériau métallique.

9. Véhicule ferroviaire (100) incluant au moins un système de commande de freinage pneumatique (1) selon l'une quelconque des revendications 1 à 8.
